# EUROPÄISCHE PATENTSCHRIFT

(11) **EP 4 034 543 B1**
(45) Veröffentlichungstag und Bekanntmachung des Hinweises auf die Patenterteilung: **03.09.2025**
(21) Anmeldenummer: 20734574.5
(22) Anmeldetag: 01.07.2020
(51) Int. Cl.: C07F 15/00, C23C 18/08

(54) **NEUE PLATINKOMPLEXE**
NOVEL PLATINUM COMPLEXES
NOUVEAUX COMPLEXES DE PLATINE

(30) Priorität: 25.09.2019 EP 19199475
(43) Veröffentlichungstag der Anmeldung: 03.08.2022
(73) Patentinhaber: Heraeus Precious Metals GmbH & Co. KG, 63450 Hanau (DE)
(72) Erfinder: SIEVI, Robert, 63450 Hanau (DE); WALTER, Richard, 63450 Hanau (DE); RAUTER, Holger, 63450 Hanau (DE); GOCK, Michael, 63450 Hanau (DE); ULLAND, Holger, 47877 Willich (DE)
(74) Vertreter: Heraeus IP
(86) Internationale Anmeldenummer: PCT/EP2020/068465
(87) Internationale Veröffentlichungsnummer: WO 2021/058154

(56) Entgegenhaltungen:
- WO-A1-2014/060864
- WO-A1-2021/089203

## Beschreibung

Die vorliegende Erfindung betrifft neue Platinkomplexe, Verfahren zu deren Herstellung und deren Verwendung zur Herstellung von Platinschichten.

WO90/07561 A1 offenbart Platinkomplexe der Formel LM[O(CO)R]₂, wobei L für einen stickstofffreien cyclischen Polyolefinliganden, bevorzugt Cyclooctadien (COD) oder Pentamethylcyclopentadien, und M für Platin oder Iridium steht, und wobei R Benzyl, Aryl oder Alkyl mit vier oder mehr Kohlenstoffatomen, besonders bevorzugt Phenyl bedeutet. Die Platinkomplexe dienen als Treibstoffadditive.

WO2014/060864A1 offenbart als Vorläufer für das metallorganische Gasphasenabscheidungsverfahren (MOCVD) verwendbare Cyclooctadienkomplexe des Platins.

Das ein Prioritätsdatum vom 6. November 2019 aufweisende, am 14. Mai 2021 nachveröffentlichte und Stand der Technik nach Art. 54(3) EPÜ bildende Dokument WO2021/089203 A1 offenbart Zubereitungen von Platinkomplexen und deren Verwendung zur Herstellung von Platinschichten auf Substraten. Die Zubereitungen enthalten oder bestehen aus:
(A) 30 bis 90 Gew.-% mindestens eines organischen Lösemittels,
(B) 10 bis 70 Gew.-% mindestens eines Platinkomplexes vom Typ [L1L2Pt[O(CO)R1]X]ₙ, wobei L1 und L2 gleiche oder verschiedene Monoolefinliganden oder zusammen eine als Diolefinligand fungierende Verbindung L1L2 bedeuten,
   wobei X ausgewählt ist unter Bromid, Chlorid, Iodid und -O(CO)R2,
   wobei -O(CO)R1 und -O(CO)R2 gleiche oder verschiedene nichtaromatische C6-C18- oder C8-C18-Monocarbonsäurereste oder zusammen einen nichtaromatischen C8-C18-Dicarbonsäurerest -O(CO)R1R2(CO)O- bedeuten,
   wobei es sich um einkernige Platinkomplexe mit n = 1 handelt oder wobei es sich im Falle der Anwesenheit von L1L2 und/oder von -O(CO)R1R2(CO)O- um mehrkernige Platinkomplexe mit ganzzahligem n > 1 handeln kann, und
(C) 0 bis 10 Gew.-% mindestens eines Additivs.

Der mindestens eine Platinkomplex kann die Formel [(COD)Pt[O(CO)R1]₂]ₙ oder [(NBD)Pt[O(CO)R1]₂]ₙ haben, wobei n 1 oder 2 ist, und wobei R1 für einen nichtaromatischen C5-C17- oder C7-C17-Kohlenwasserstoffrest steht.

Aufgabe der vorliegenden Erfindung war es, Platinverbindungen zu finden, welche zur Herstellung von Platinschichten insbesondere auch auf temperaturempfindlichen Substraten verwendet werden können.

Die Aufgabe kann gelöst werden durch Bereitstellung von Platinkomplexen vom Typ [(COD)Pt[O(CO)R1]₂]ₙ , wobei n 1 oder 2 und insbesondere 1 ist, und wobei R1 für einen nichtaromatischen C7-C17-Kohlenwasserstoffrest mit Ausnahme von Benzyl steht.

Kohlenwasserstoffe wie COD (1,5-Cyclooctadien) sind Beispiele für Diolefine respektive für Verbindungen vom Typ L1L2, welche befähigt sind als Diolefinligand zu fungieren.

Die nichtaromatischen Monocarbonsäurereste -O(CO)R1 bedeuten nichtaromatische C8-C18-Monocarbonsäurereste jeweils mit Ausnahme eines Phenylessigsäurerests. Der in diesem Zusammenhang verwendete Begriff "nichtaromatisch" schließt rein aromatische Monocarbonsäurereste aus, nicht jedoch araliphatische Monocarbonsäurereste, deren Carboxylfunktion an aliphatischen Kohlenstoff gebunden ist.

Beispiele für nichtaromatische C8-C18-Monocarbonsäuren mit Resten -O(CO)R1 umfassen die isomeren Octansäuren einschließlich n-Octansäure und 2-Ethylhexansäure, die isomeren Nonansäuren, und die isomeren Decansäuren, um nur einige Beispiele zu nennen. Die jeweils an eine Carboxylgruppe gebundenen Reste R1 umfassen 7 bis 17 Kohlenstoffatome; Benzyl ist dabei ausgenommen.

Die erfindungsgemäßen Platinkomplexe [(COD)Pt[O(CO)R1]₂]ₙ können auf einfachem Wege durch Ligandenaustausch hergestellt werden, insbesondere ohne dabei Carbonsäuresalze des Silbers zu verwenden. Das Herstellungsverfahren umfasst ein Durchmischen respektive Suspendieren oder Emulgieren eines Zweiphasensystems. Die eine Phase umfasst dabei ein Edukt vom Typ [L1L2PtX₂]ₙ mit X ausgewählt unter Bromid, Chlorid und Iodid, bevorzugt Chlorid, entweder als solches oder in Form einer zumindest im Wesentlichen nicht wassermischbaren organischen Lösung eines solchen Eduktes, wobei L1L2 COD (1,5-Cyclooctadien) bedeutet. Beispiele für geeignete zumindest im Wesentlichen nicht wassermischbare organische Lösemittel umfassen neben Aromaten und chlorierten Kohlenwasserstoffen wie Toluol, Xylol, Di-, Tri- und Tetrachlormethan auch sauerstoffhaltige Lösemittel, beispielsweise entsprechende nicht wassermischbare Ketone, Ester und Ether. Die andere Phase hingegen umfasst eine wässrige Lösung von Alkalisalz (insbesondere Natrium- oder Kaliumsalz) und/oder von Magnesiumsalz einer C8-C18-Monocarbonsäure vom Typ R1COOH. Die Wahl der Art des oder der Carbonsäuresalze richtet sich nach der Art des herzustellenden erfindungsgemäßen Platinkomplexes. Die beiden Phasen werden intensiv unter Bildung einer Suspension oder Emulsion durchmischt, beispielsweise durch Schütteln und/oder Rühren. Das Durchmischen wird zwecks Aufrechterhaltung des Suspensions- oder Emulsionszustandes beispielsweise für eine Zeitdauer von 0,5 bis 24 Stunden durchgeführt, beispielsweise bei einer Temperatur im Bereich von 20 bis 50 °C. Dabei findet der Ligandenaustausch statt, wobei sich der oder die gebildeten erfindungsgemäßen Platinkomplexe in der organischen Phase lösen, während sich das ebenfalls gebildete AlkaliX-Salz oder MgX₂-Salz in der wässrigen Phase löst. Nach beendetem Suspendieren oder Emulgieren werden organische und wässrige Phase voneinander getrennt. Aus der organischen Phase können der oder die gebildeten erfindungsgemäßen Platinkomplexe gewonnen und gegebenenfalls anschließend mittels üblicher Methoden gereinigt werden.

So kann beispielsweise, um nur ein konkretes Beispiel zu nennen, (COD)Pt[O(CO)CH(C₂H₅)C₄H₉]₂ durch gemeinsames Emulgieren einer Lösung von (COD)PtCl₂ in Dichlormethan mit einer wässrigen Lösung von Natrium-2-ethylhexanoat hergestellt werden. Nach beendetem Emulgieren kann die dabei durch Ligandenaustausch gebildete Kochsalzlösung von der Dichlormethanphase abgetrennt und aus letzterer das (COD)Pt[O(CO)CH(C₂H₅)C₄H₉]₂ isoliert und gegebenenfalls durch übliche Reinigungsverfahren aufgereinigt werden.

Die erfindungsgemäßen Platinkomplexe sind gut bis unbegrenzt löslich in üblichen organischen Lösemitteln. So können sie beispielsweise in Aliphaten, Cycloaliphaten, Aromaten wie Toluol oder Xylol, Alkoholen, Ethern, Glykolethern, Estern und Ketonen gelöst werden unter Ausbildung echter Lösungen, d.h. nichtkolloidaler Lösungen.

Eine wichtige Eigenschaft neben besagter Löslichkeit in üblichen organischen Lösemitteln ist die vergleichsweise niedrige Zersetzungstemperatur der erfindungsgemäßen Platinkomplexe beispielsweise schon ab 150 °C bis im Allgemeinen nicht höher als 200 °C. Diese Eigenschaftskombination erlaubt es, die erfindungsgemäßen Platinkomplexe zur Herstellung von Platinschichten auf Substraten zu verwenden. Vorteilhaft bei der Herstellung von Platinschichten mittels der erfindungsgemäßen Platinkomplexe ist auch, dass keine kolloidales Platin oder Nanoplatin enthaltende Zubereitungen verwendet werden müssen, so dass damit verbundene eventuelle Risiken vermieden werden können.

Zwecks Erzeugung einer Platinschicht können die organisch gelösten erfindungsgemäßen Platinkomplexe auf ein Substrat aufgebracht werden, beispielsweise unmittelbar als organische Lösung oder die organische Lösung kann Bestandteil einer mindestens einen weiteren Bestandteil aufweisenden Zubereitung sein. Eine erfindungsgemäßen Platinkomplex oder erfindungsgemäße Platinkomplexe umfassende Beschichtung kann zunächst getrocknet und von organischem Lösemittel befreit werden, bevor sie bzw. der getrocknete Rückstand durch thermische Behandlung einer Zersetzung unter Bildung metallischen Platins in Form einer Schicht unterworfen wird. Die thermische Behandlung umfasst eine Erwärmung auf eine Objekttemperatur oberhalb der Zersetzungstemperatur des erfindungsgemäßen Platinkomplexes. Im Allgemeinen wird dazu beispielsweise kurzzeitig auf eine Objekttemperatur oberhalb des vorerwähnten Zersetzungstemperaturbereichs von 150°C bis 200 °C erwärmt, also beispielsweise entsprechend auf >150 °C bis >200 °C, beispielsweise bis 1000 °C, beispielsweise in einem Ofen und/oder durch Infrarotbestrahlung. Im Allgemeinen wird eine Objekttemperatur geringfügig oberhalb der Zersetzungstemperatur gewählt. Im Allgemeinen benötigt das Erwärmen, genauer gesagt das Einhalten der Objekttemperatur nicht länger als 15 Minuten.

Die so erhältlichen Platinschichten zeichnen sich durch hohen metallischen Glanz vergleichbar einem Spiegel aus; die Platinschichten sind homogen im Sinne einer glatten nichtkörnigen äußeren Oberfläche. Die Dicke solcher Platinschichten kann beispielsweise im Bereich von 50 nm bis 5 µm liegen und die Platinschichten können eine flächige Natur mit oder ohne gewünschte Unterbrechungen innerhalb der Fläche haben oder ein gewünschtes Muster oder Design aufweisen. Die Platinschichten können sogar auf temperaturempfindlichen Substraten erzeugt werden, d.h. beispielsweise auf Substraten, die oberhalb 200 °C nicht temperaturstabil sind. Beispielsweise kann es sich um temperaturempfindliche Polymersubstrate handeln, beispielsweise solche auf Polyolefin- oder Polyesterbasis.

### Beispiele

### Beispiel 1 (Herstellung von (COD)Pt[O(CO)CH(C₂H₅)C₄H₉]₂ und Verwendung zur Herstellung einer Platinschicht):

Eine Lösung von 65 mmol (COD)PtCl₂ in 100 ml Dichlormethan wurde gerührt und eine Lösung von 260 mmol Natrium-2-ethylhexanoat in 500 ml Wasser zugegeben. Die Zweiphasenmischung wurde 24 h bei 20°C durch intensives Rühren emulgiert. Dabei färbte sich die Dichlormethanphase gelb.

Die Dichlormethanphase wurde abgetrennt und das Lösungsmittel abdestilliert. Der zähflüssige, gelbe Rückstand wurde in Petroleumbenzin (40-60) aufgenommen und die Lösung mit Magnesiumsulfat getrocknet und filtriert. Dann wurde das Petroleumbenzin vollständig abdestilliert. Zurück blieb ein zähflüssiger gelber Rückstand von (COD)Pt[O(CO)CH(C₂H₅)C₄H₉]₂. Aus einer 20 µm dicken Schicht des (COD)Pt[O(CO)CH(C₂H₅)C₄H₉]₂ konnte nach 10 minütigem Erhitzen auf 200 °C eine spiegelnde 0,5 µm dünne Schicht aus Platin erhalten werden.

### Beispiel 2 Herstellung von (COD)Pt[O(CO)C₇H₁₅]₂):

Analog zu Beispiel 1 wurden 32,5 mmol (COD)PtCl₂ in 100 ml Dichlormethan mit 130 mmol Natrium-n-octoat in 200 ml Wasser umgesetzt.

### Beispiel 3 (Herstellung von (COD)Pt/O(CO)C₈H₁₇]₂):

Analog zu Beispiel 1 wurden 130 mmol (COD)PtCl₂ in 200 ml Dichlormethan mit 520 mmol Natriumisononanoat in 500 ml Wasser umgesetzt.

### Beispiel 4 (Herstellung von (COD)Pt[O(CO)(CH₂)₅C(CH₃)₃]₂):

Analog zu Beispiel 1 wurden 65 mmol (COD)PtCl₂ in 100 ml Dichlormethan mit 260 mmol Natriumneodecanoat in 500 ml Wasser umgesetzt.

## Patentansprüche

1. Platinkomplex vom Typ [(COD)Pt[O(CO)R1]₂]ₙ, wobei n 1 oder 2 ist, wobei R1 für einen nichtaromatischen C7-C17-Kohlenwasserstoffrest mit Ausnahme von Benzyl steht, und wobei der Begriff "nichtaromatisch" rein aromatische Monocarbonsäurereste ausschließt, nicht jedoch araliphatische Monocarbonsäurereste, deren Carboxylfunktion an aliphatischen Kohlenstoff gebunden ist.

2. Verfahren zur Herstellung von Platinkomplexen nach Anspruch 1 durch Ligandenaustausch, umfassend ein Emulgieren eines Zweiphasensystems, wobei die eine Phase eine zumindest im Wesentlichen nicht wassermischbare organische Lösung eines Edukts vom Typ [L1L2PtX₂]ₙ mit X ausgewählt unter Bromid, Chlorid und lodid umfasst und wobei die andere Phase eine wässrige Lösung von Alkali- und/oder Magnesiumsalz einer Monocarbonsäure R1COOH umfasst, wobei L1L2 COD (1,5-Cyclooctadien) bedeutet.

3. Verwendung eines oder mehrerer Platinkomplexe nach Anspruch 1 oder erhältlich durch ein Verfahren nach Anspruch 2 zur Herstellung einer Platinschicht auf einem Substrat.

4. Verwendung nach Anspruch 3, wobei es sich bei dem Substrat um ein temperaturempfindliches Substrat handelt.

5. Verwendung nach Anspruch 3 oder 4, umfassend die Bereitstellung einer organischen Lösung des oder der Platinkomplexe, Aufbringen der organischen Lösung unmittelbar oder als Bestandteil einer mindestens einen weiteren Bestandteil aufweisenden Zubereitung auf ein Substrat, und Erwärmen der aufgebrachten Beschichtung auf eine Objekttemperatur oberhalb der Zersetzungstemperatur des oder der Platinkomplexe.

## Claims

1. A platinum complex of the type [(COD)Pt[O(CO)R1]₂]ₙ, where n is 1 or 2, where R1 is a nonaromatic C7-C17 hydrocarbon group with the exception of benzyl, and where the term "nonaromatic" excludes purely aromatic monocarboxylic acid groups, but not araliphatic monocarboxylic acid groups of which the carboxyl function is bonded to aliphatic carbon.

2. A method for preparing platinum complexes according to claim 1 by ligand exchange, comprising emulsifying a two-phase system, where one phase is an at least substantially water-immiscible organic solution of a reactant of the type [L1L2PtX₂]ₙ, with X selected from bromide, chloride and iodide, and where the other phase comprises an aqueous solution of alkali salt and/or magnesium salt of a monocarboxylic acid R1COOH, where L1L2 is COD (1,5-cyclooctadiene).

3. A use of one or more platinum complexes according to claim 1 or obtainable by a method according to claim 2 for preparing a platinum layer on a substrate.

4. The use according to claim 3, wherein the substrate is a temperature-sensitive substrate.

5. The use according to claim 3 or 4, comprising providing an organic solution of the platinum complex(es), applying the organic solution directly or as a component of a preparation comprising at least one further component to a substrate, and heating the applied coating to an object temperature above the decomposition temperature of the platinum complex(es).

## Revendications

1. Complexe de platine de type [(COD)Pt[O(CO)R1]₂]ₙ, où n est égal à 1 ou 2, où R1 représente un radical hydrocarboné non aromatique en C7-C17 à l'exception du benzyle, et où le terme « non aromatique » exclue les radicaux d'acides monocarboxyliques purement aromatiques, mais pas les radicaux d'acides monocarboxyliques araliphatiques dont la fonction carboxyle est liée à un carbone aliphatique.

2. Procédé pour la fabrication de complexes de platine selon la revendication 1 par échange de ligands, comprenant une émulsion d'un système à deux phases, dans lequel une phase comprend une solution organique au moins sensiblement non miscible à l'eau d'un réactif de type [L1L2PtX₂]ₙ avec X choisi parmi bromure, chlorure et iodure, et dans lequel l'autre phase comprend une solution aqueuse de sel alcalin et/ou de sel de magnésium d'un acide monocarboxylique R1COOH, où L1L2 représente COD (1,5-cyclooctadiène).

3. Utilisation d'un ou de plusieurs complexes de platine selon la revendication 1 ou pouvant être obtenus par un procédé selon la revendication 2 pour la fabrication d'une couche de platine sur un substrat.

4. Utilisation selon la revendication 3, dans laquelle le substrat est un substrat sensible à la température.

5. Utilisation selon la revendication 3 ou 4, comprenant la mise à disposition d'une solution organique du ou des complexes de platine, l'application de la solution organique directement sur un substrat ou en tant que constituant d'une préparation présentant au moins un autre constituant, et le chauffage du revêtement appliqué à une température d'objet supérieure à la température de décomposition du ou des complexes de platine.
